Europäisches Patentamt

European Patent Office

Office européen des brevets

(11) Numéro de publication: **0 067 836**
**B1**

# FASCICULE DE BREVET EUROPEEN

(45) Date de publication du fascicule du brevet:
**25.09.85**

(51) Int. Cl.⁴: **G 01 L 17/00,** B 60 C 23/04

(21) Numéro de dépôt: **82900111.4**

(22) Date de dépôt: **22.12.81**

(86) Numéro de dépôt international:
**PCT/FR 81/00167**

(87) Numéro de publication internationale:
**WO 82/02249 (08.07.82** Gazette 82/17)

(54) **DISPOSITIF DE MESURE D'UN PARAMETRE SUR UN ORGANE ROTATIF.**

(30) Priorité: **29.12.80 FR 8027676**

(43) Date de publication de la demande:
**29.12.82 Bulletin 82/52**

(45) Mention de la délivrance du brevet:
**25.09.85 Bulletin 85/39**

(84) Etats contractants désignés:
**DE GB**

(56) Documents cités:
**FR - A - 2 344 007**
**FR - A - 2 440 042**
**FR - A - 2 444 308**
**US - A - 3 824 857**

(73) Titulaire: **PRECISION MECANIQUE LABINAL, 5 Avenue Newton Parc d'activités, F-78390 Bois d'Arcy (FR)**

(72) Inventeur: **ABRAHAM, Michel, 11 rue du Chemin aux Boeufs, F-78310 Elancourt (FR)**

(74) Mandataire: **Lemoine, Michel et al, Cabinet Michel Lemoine 13 Boulevard des Batignolles, F-75008 Paris (FR)**

### Description

La présente invention a trait à un dispositif de mesure d'un paramètre tel que par exemple une pression, sur un organe rotatif tel que par exemple une roue, ledit dispositif étant applicable notamment à la mesure de la pression interne d'un pneumatique sur une roue, par exemple une roue de train d'atterrissage d'avion.

On a déjà proposé plusieurs dispositifs destinés à donner une indication conernant la valeur d'un paramètre au niveau d'un organe rotatif ou d'une roue, ce paramètre pouvant être notamment la pression dans un pneumatique monté sur une roue.

La plupart de ces dispositifs ne peuvent fournir qu'une indication limitée à une valeur définie du paramètre provoquant la fermeture ou l'ouverture d'un contact électrique, la lecture de l'information correspondante étant effectuée à chaque tour de roue au moment de la coïncidence angulaire entre l'élément porté par la roue et un élément correspondant fixe. Outre leur incapacité à effectuer une mesure sur une large plage de valeurs, ces dispositifs sont limités dans leur utilisation du fait qu'à l'arrêt de l'organe rotatif dans une position aléatoire, il leur est impossible soit d'effectuer la mesure, soit d'assurer la transmission d'une mesure qui aurait été effectuée.

On a également déjà proposé de monter, sur une roue portant un pneumatique, un émetteur radio-électrique ou ultrasonore susceptible de transmettre une information à un récepteur monté sur une partie fixe. De tels dispositifs peuvent éventuellement fonctionner même à l'arrêt de l'organe rotatif dans une position aléatoire. Ils sont cependant d'un emploi limité car la source d'énergie nécessaire à l'émission est obligatoirement réduite de sorte que ces dispositifs servent uniquement d'avertisseurs de dégonflement de pneumatiques. Enfin, l'utilisation d'ondes ultrasonores ou hertziennes n'est guère envisageable dans des applications telles que les trains d'atterrissage d'avion en raison d'une part de la sévérité de l'environnement, d'autre part des interférences hertziennes et ultrasonores possibles.

On a également déjà prévu de réaliser un dispositif permettant d'une part de transmettre une énergie électrique à une première fréquence entre un élément fixe et un élément rotatif, par l'intermédiaire d'un transformateur dont les enroulements primaire et secondaire peuvent tourner l'un par rapport à l'autre, ce transformateur permettant de transmettre en sens inverse un signal électrique de fréquence fixe nettement plus élvée, généré dans la partie rotative et transmis à la partie fixe. Un tel dispositif n'est cependant pas capable de fournir d'une façon simple le résultat d'une mesure qui serait effectuée dans la partie tournante et n'est donc pas utilisable, de façon à la fois simple et précise.

Enfin on a également déjà proposé un dispositif de mesure de pression dans un pneumatique de roue d'avion dans lequel un générateur électrique adresse à un circuit de mesure installé dans la roue elle-même, par l'intermédiaire de moyens de couplage, une énergie électrique à haute fréquence, le dispositif permettant en sens inverse la transmission d'un signal de mesure dans le domaine des basses fréquences. Un tel dispositif est de réalisation relativement facile, mais présente des performances obligatoirement limitées en raison du transfert des résultats de mesure à basse fréquence.

On connaît également d'après le brevet français FR-A-2 440 042 un dispositif pour la mesure d'un paramètre sur un organe rotatif tournant sur un axe par rapport à une structure fixe avec, sur la structure fixe un générateur d'énergie électrique alimentant le circuit du capteur relatif audit paramètre ainsi que des moyens d'exploitation sensibles au signal généré dans ce circuit. Le couplage entre la partie rotative et la partie fixe s'effectue par un transformateur en forme de machine tournante conçue pour la transmission d'un signal de basse fréquence relatif au paramètre. Ce dispositif n'est cependant pas adapté à la transmission du signal dans un environnement sévère, variable et chargé d'artefacts électromagnétiques et hertziens comme cela est le cas dans l'environnement aéronautique, notamment au niveau des trains d'atterrissage.

La présente invention se propose de remédier à ces inconvénients et de fournir un dispositif de mesure d'un paramètre sur un organe rotatif permettant d'obtenir de façon continue ou pratiquement continue la valeur de la mesure, et ceci quelle que soit la position angulaire de l'organe rotatif pendant sa rotation ou durant l'arrêt.

Un autre objectif de l'invention est de fournir un tel dispositif qui soit capable, avec un grand degré de sécurité, de fournir des indications de mesure extrêmement précises sur une large plage de variation du paramètre.

Un autre objectif de l'invention est de fournir un tel dispositif qui soit de construction simple et permette des mesures précises.

Un autre objectif encore de l'invention est de fournir un tel dispositif particulièrement adapté à la mesure sur des organes rotatifs tels que des roues d'avion, fonctionnant dans un environnement particulièrement difficile.

Un autre objectif encore de l'invention est de fournir un tel dispositif applicable notamment à la mesure de la pression dans les pneumatiques de roue, en particulier les roues d'avion, qui présente une fiabilité très importante avec un risque de pannes ou fausses indications particulièrement réduit, voire pratiquement nul.

L'invention a pour objet un dispositif de mesure d'un paramètre sur un organe rotatif tournant autour d'un axe porté par une structure fixe, dans lequel l'organe rotatif porte au moins un capteur pour la détection de ce paramètre ainsi qu'un circuit électrique associé audit capteur, et la structure porte, d'une part, un générateur d'énergie électrique destiné à alimenter ledit circuit électrique, et, d'autre part, des moyens d'exploitation sensibles à un signal de mesure dudit paramètre généré dans ledit circuit électrique, des moyens de couplage entre ledit organe rotatif et ledit axe permettant de transmettre ladite énergie électrique du générateur vers le circuit électrique associé au capteur et ledit signal de mesure génère par ledit circuit électrique vers lesdits moyens d'exploitation et comprenant au moins un transformateur en forme de machine tournante dont le primaire fixe est solidaire de l'axe et le secondaire rotatif est solidaire de l'organe rotatif, caractérisé en ce que ledit générateur émet une puissance électrique à une fréquence inférieure à 10 kHz, que ledit circuit électrique associé au capteur génère un signal de mesure de haute fréquence variable sur une large bande comprise entre 20 et 100 kHz, la structure des moyens de couplage autorisant le passage d'une large bande passante comprise entre au moins la fréquence du générateur et 100 kHz.

Conformément à une caractéristique particulièrement avantageuse de l'invention, le circuit électrique associé au capteur présente un convertisseur tension/fréquence transformant une tension constituant le signal fourni par le capteur en une fréquence fonction de ladite tension.

Selon une autre caractéristique avantageuse de l'invention, les moyens d'exploitation sensibles au signal à fréquence élevée comprennent un filtre passebande de 20 à 100 kHz.

De préférence, le générateur d'énergie électrique délivre une énergie électrique à une basse fréquence fixe comprise entre 2000 et 5000 Hz.

Le circuit électrique associé au capteur présente d'une part des moyens reliés au secondaire du transformateur pour assurer une alimentation des autres composants du circuit à une tension régulée stabilisée. Le circuit comprend d'autre part un convertisseur tension/fréquence, suivi d'un moyen de filtrage puis d'un moyen de linéarisation du signal permettant de transformer le signal carré de haute fréquence du convertisseur en un signal sinusoïdal de même fréquence qui est injecté sur le secondaire du transformateur, par exemple au moyen d'un couplage capacitif.

On retrouve alors sur le primaire du transformateur une onde porteuse à la fréquence du générateur, superposée à une onde de fréquence variant sur une large plage comprise entre 20 et 100 kHz.

Le filtre passe-bande est avantageusement précédé d'un circuit de réjection de la basse fréquence alors que le générateur, en raison de la fréquence très élevée du signal transmis du secondaire au primaire, peut être protégé par une simple self de choc, de même que les moyens d'alimentation stabilisée.

Le transformateur peut être avantageusement réalisé sous forme d'une machine tournante possédant un stator et un rotor multipolaires, par exemple à 24 pôles. D'autres transformateurs peuvent également être utilisés, par exemple du type à enroulements primaires et secondaires coaxiaux.

Dans l'application du dispositif selon l'invention à la mesure de la pression, des pneumatiques dans un train d'atterrissage d'avion, le capteur est avantageusement constitué d'une jauge de contrainte, par exemple un pont de jauge de contrainte diffusé sur un substrat monocristal de silicium. La jauge de contrainte est placée de façon telle qu'elle soit convenablement déformée par la pression régnant dans le pneumatique, le pont délivrant une tension variant de façon continue en fonction de la déformation.

Dans une telle application, le dispositif présente avantageusement pour chaque roue un tel capteur de pression, chaque roue présentant un transformateur, les primaires des différents transformateurs étant relié, de préférence par paires torsadées blindées, à un dispositif de multiplexage recevant les conducteurs de sortie du générateur électrique et aboutissant par une sortie convenable à une unité de traitement logique permettant d'exploiter différentes mesures de pression qui lui sont adressées sous forme d'un signal à haute fréquence sur une large bande. De préférence, l'unité de traitement logique commande les moyens de multiplexage de façon à effectuer les différentes mesures sur les différentes roues de manière séparée et successive.

D'autres avantages et caractéristiques de l'invention apparaîtront à la lecture de la description suivante faite à titre d'exemple non limitatif et se référant au dessin annexé dans lequel:

La figure 1 représente une vue schématique du dispositif selon l'invention, utilisé pour un seul organe rotatif.

La figure 2 représente une vue schématique du circuit formé par un pont de jauge de contrainte.

La figure 3 représente une vue schématique de la partie fixe du circuit dans l'application à la mesure de pression des pneumatiques d'un train d'atterrissage.

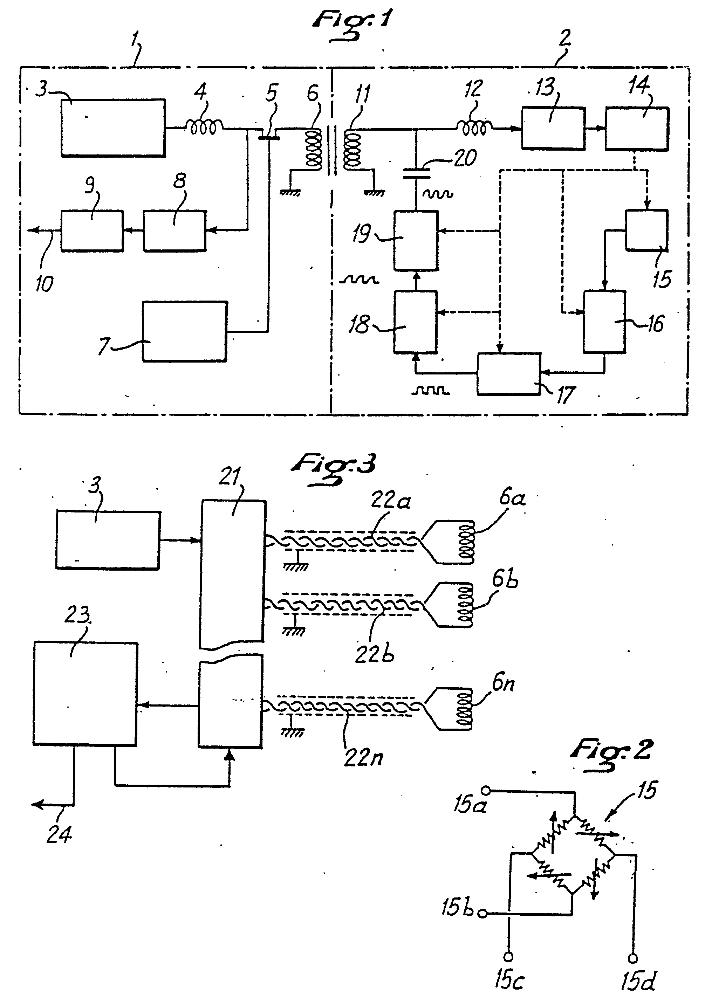

On se réfère tout d'abord à la figure 1 qui représente schématiquement un dispositif destiné à la mesure de la pression dans un seul pneumatique d'une roue de train d'atterrissage, et ceci à seul titre de simplification de l'exposé.

Le dispositif représenté comporte une partie fixe 1 et une partie mobile 2 portée par la roue, chaque partie étant représentée à l'intérieur d'un contour en trait mixte. La partie fixe 1 comporte un générateur 3 permettant de délivrer une énergie électrique à une fréquence de 3200 Hz. Cette énergie électrique franchit sans atténuation notable une self de choc 4 et un organe de commutation 5 tel qu'un transistor MOS-FET de puissance pour alimenter le primaire 6 d'un transformateur constitué d'une machine tournante possédant un stator, en l'occurrence le primaire 6, à 24 pôles et un rotor 11 à 24 pôles correspondants. Un dispositif de pilotage quelconque 7 permet d'agir sur l'organe de commutation 5 pour autoriser ou non l'alimentation du primaire 6 par le générateur 3. Une dérivation située entre l'organe 5 et la self 4 aboutit à un circuit de réjection 8 empêchant le passage de la fréquence de 3200 kHz mais autorisant le passage des fréquences supérieures. Ce circuit 8 est relié à un filtre passe-bande 9 de 20 à 100 kHz. La sortie 10 du filtre passe-bande 9 peut être reliée à un dispositif d'exploitation du résultat tel qu'un calculateur.

La partie 2, montée sur la roue, comporte d'abord le secondaire 11, c'est-à-dire le rotor du transformateur. On doit comprendre à ce sujet que le stator 6 est porté par la fusée de la roue alors que le rotor 11 est porté par la roue elle-même coaxialement à la fusée et au stator 6.

La sortie secondaire 11 aboutit à une self de choc 12 puis, de là, à une unité de filtrage et de redressement 13 fournissant la puissance électrique nécessaire à un circuit d'alimentation régulée 14. Ce circuit est capable, lorsqu'il reçoit la puissance provenant du générateur 3, de délivrer une tension stabilisée de bas voltage.

Toujours dans la partie rotative 2 est disposé un capteur de pression 15 sensible à la pression régnant dans le pneumatique de la roue. Ce capteur 15, auquel peut avantageusement être associé un circuit de compensation, notamment pour les variations de température, d'un type usuel, émet, en réponse à la valeur de la pression qu'il détecte, une tension fonction de cette pression qui est adressée à un amplificateur différentiel 16. La sortie de l'amplificateur 16 est adressée à un convertisseur tension/fréquence 17 qui émet un signal carré d'une fréquence fonction de la tension qu'il reçoit, par exemple une fréquence proportionnelle à cette tension. La sortie du convertisseur 17 est adressée à un organe de filtrage classique 18, suivi d'un circuit de linéarisation du signal 19 permettant de sortir un signal sensiblement sinusoïdal dont la fréquence est fonction de la tension de sortie du capteur de pression 15. Ce signal sinusoïdal, dont la fréquence est comprise entre 20 et 100 kHz, est alors injecté par l'intermédiaire d'une capacité d'injection 20 dans le secondaire 11 du transformateur. La self de choc 12 empêche que ce signal de haute fréquence ne parvienne aux circuits 13 et 14.

Le circuit d'alimentation stabilisé 14 adresse, comme on le voit par la ligne en trait interrompu, une tension stabilisée de 10,5 volts à chacun des éléments 15, 16, 17, 18 et 19 pour le fonctionnement de ces organes.

Le signal sinusoïdal de haute fréquence injecté dans le secondaire 11 se retrouve aux bornes du primaire 6 et, franchissant l'organe de commutation 5, il aboutit au circuit de réjection 8 qui l'autorise à atteindre le filtre passe-bande 9 de sorte que le signal haute fréquence compris entre 20 et 100 kHz est disponible sur la sortie 10 en étant débarrassé de l'onde à basse fréquence et de tous les signaux parasites ou harmoniques qui auraient pu être induits. Le signal peut alors être exploité, par exemple, par un calculateur.

En se référant à la figure 2, on voit que le capteur de pression 15 est conçu comme un pont de jauge de contrainte diffusée sur un substrat monocristal dont les résistances varient en fonction de la pression. Les bornes 15$\underline{a}$, 15$\underline{b}$ reçoivent la tension d'alimentation stabilisée de 10,5 volts et le signal du capteur, sensible à la pression, est disponible sur les bornes 15$\underline{c}$, 15$\underline{d}$.

En se référant à la figure 3, on voit schématiquement la partie fixe d'un dispositif destiné à la mesure de la pression sur un train d'atterrissage d'un avion de taille importante. On retrouve le générateur 3 qui adresse son signal sinusoïdal à basse fréquence à une unité de multiplexage et filtrage 21 d'où s'étendent une pluralité de paires torsadées 22$\underline{a}$, 22$\underline{b}$; . . .22$\underline{n}$ aboutissant respectivement aux primaires 6$\underline{a}$, 6$\underline{b}$ . . . .6$\underline{n}$ montés respectivement sur les fusées des $\underline{n}$ roues. Les paires torsadées sont protégées par un blindage schématiquement représenté et mis à la terre. Une calculatrice de traitement logique 23 commande l'unité de multiplexage et filtrage 21 dont elle reçoit les signaux de mesure qu'elle traite et qu'elle adresse par une sortie 24 à des moyens d'affichage (non représentés) sur le tableau de bord de l'appareil.

On doit donc comprendre que l'unité de multiplexage et filtrage 21 comporte des moyens de commutation qui remplacent l'organe de commutation 5 ainsi que des moyens de réjection et de filtrage passe-bande qui remplacent les moyens 8 et 9.

Par ailleurs, on comprend qu'à chaque primaire de transformateur 6$\underline{a}$, 6$\underline{b}$ . . . .6$\underline{n}$ se trouve associé un secondaire sur la roue correspondante, chaque secondaire étant relié, sur sa roue, à un circuit de roue analogue au circuit 2.

Le fonctionnement du dispositif selon la figure 3 est alors le suivant: le signal alternatif de basse fréquence comprise entre 2000 et 5000 Hz est généré de façon constante par le générateur 3. Le calculateur 23 commute la sortie du générateur successivement vers les différents primaires 6$\underline{a}$, 6$\underline{b}$ . . .6$\underline{n}$ pendant une première période par exemple de quelques dizaines de millisecondes, la première moitié de cette période servant à l'établissement d'un régime continu. Pendant cette période, les organes 17, 18, 19, ne réinjectent pas de signal ou, en variante, le dispositif de multiplexage et filtrage 21 n'autorise pas le passage d'un tel signal. Une fois le régime continu établi après la première moitié de la période, le signal sinusoïdal haute fréquence entre 20 et 100 kHz est injecté dans le secondaire et parvient de là au primaire de la roue correspondante puis à l'unité de multiplexage et filtrage 21 qui l'adresse au calculateur 23. A la suite de cette seconde demi-période, le calculateur 23 commute alors vers la roue suivante. La durée de l'exploitation par le calculateur 23 peut soit être de l'ordre de la demi-période, soit s'étendre sur une durée plus longue du fait que le calculateur peut travailler pendant les demi-périodes correspondant à l'établissement du régime continu, pendant lesquelles le calculateur ne reçoit pas de signal de mesure.

De préférence, le calculateur 23 est programmé de façon que, lorsqu'il détecte une pression incorrecte soit dans sa valeur absolue, soit dans sa valeur différentielle par rapport à la pression d'une autre roue du train, il attende d'avoir mesuré trois fois de suite la même valeur anormale pour générer un signal d'alarme. En outre, les composants électroniques sont agencés d'une façon en soi usuelle, pour que la très grande majorité des pannes possibles engendrent une alerte dite «alarme système» et non pas une «alarme pression» intempestive. En particulier, toute rupture de fil d'alimentation provoque une «alarme système».

Il est en effet essentiel d'éviter toute apparition intempestive d'une «alarme pression» de façon à ne pas risquer de provoquer une interruption brutale d'une procédure de décollage.

Bien que l'invention ait été décrite à propos d'une forme de réalisation particulière, il est bien entendu qu'on peut lui apporter diverses modifications sans pour cela s'éloigner ni de son cadre ni de son esprit.

**Revendications**

1. Dispositif de mesure d'un paramètre sur un organe rotatif (2) tournant autour d'un axe porté par une structure fixe (1), dans lequel l'organe rotatif (2) porte au moins un capteur (15) pour la détection de ce paramètre ainsi qu'un circuit électrique associé audit capteur (15), et la structure fixe (1) porte, d'une part, un générateur (3) d'énergie électrique destiné à alimenter ledit circuit électrique et, d'autre part, des moyens d'exploitation (8, 9) sensibles à un signal de mesure dudit paramètre généré dans ledit circuit électrique, des moyens de couplage (4, 5, 6, 7, 11, 20) entre ledit organe rotatif (2) et ledit axe, permettant de transmettre ladite énergie électrique du générateur (3) vers le circuit électrique associé au capteur et ledit signal de mesure généré par ledit circuit électrique vers lesdits moyens d'exploitation (8, 9) et comprenant au moins un transformateur (6, 11) en forme de machine tournante dont le primaire fixe (6) est solidaire de l'axe et le secondaire rotatif (11) est solidaire de l'organe rotatif (2), caractérisé en ce que ledit générateur (3) émet une puissance électrique à une fréquence inférieure à 10 kHz, que ledit circuit électrique (13, 14, 16, 17, 18, 19, 20) associé au capteur (15) génère un signal de mesure de haute fréquence variable sur une large bande comprise entre 20 et 100 kHz, la structure des moyens de couplage (4, 5, 6, 7, 11, 20) autorisant le passage d'une large bande passante comprise au moins entre la fréquence du générateur et 100 kHz.

2. Dispositif de mesure selon la revendication 1, caractérisé en ce que ledit générateur (3) émet une puissance électrique à une fréquence comprise entre 2 et 5 kHz.

3. Dispositif de mesure selon la l'une quelconque des revendications 1 ou 2, caractérisé en ce que le circuit électrique associé au capteur (15) présente un convertisseur tension/fréquence (17) transformant une tension variable, constituant le signal fourni par le capteur (15), en une fréquence fonction de ladite tension.

4. Dispositif de mesure selon la revendication 3, caractérisé en ce que ledit convertisseur tension/fréquence (17) est suivi d'un moyen de filtrage (18) et d'un moyen de linéarisation (19) du signal afin de transformer un signal carré de haute fréquence sortant dudit convertisseur (17) en un signal sinusoïdal de même fréquence.

5. Dispositif de mesure selon l'une quelconque des revendications 1 à 4, caractérisé en ce qu'il comporte un couplage capacitif (20) entre ledit circuit associé au capteur (15) et le secondaire (11) du transformateur pour l'injection sur ce secondaire du signal de mesure.

6. Dispositif de mesure selon l'une quelconque des revendications 1 à 5, caractérisé en ce que ledit circuit associé au capteur (15) comporte des moyens (13) redresseurs et de filtrage et un circuit (14) d'alimentation régulé et stabilisée, alimentant les éléments (15–19) dudit circuit associé au capteur.

7. Dispositif de mesure selon la revendication 6, caractérisé en ce que lesdits moyens (13) redresseurs et de filtrage et ledit circuit (14) d'alimentation stabilisée sont protégés du signal de mesure haute fréquence par une self de choc (12).

8. Dispositif de mesure selon l'une quelconque des revendications 1 à 7, caractérisé en ce que lesdits moyens d'exploitation (8, 9) comportent un filtre passe-bande (9) de 20 à 100 kHz.

9. Dispositif de mesure selon la revendication 8, caractérisé en ce que ledit filtre passe-bande (9) est précédé d'un réjecteur (8).

10. Dispositif de mesure selon l'une quelconque des revendications 1 à 9, caractérisé en ce qu'il comporte une pluralité de transformateurs en forme de machine tournante dont les primaires (6a, 6b, . . .. 6n) sont respectivement reliés à une unité de multiplexage et filtrage (21) recevant l'énergie électrique provenant dudit générateur (3), ladite unité (21) étant commandée par un calculateur (23) qui reçoit d'autre part les signaux de mesure provenant de ladite unité (21).

11. Dispositif de mesure selon la revendication 10, caractérisé en ce que ledit calculateur (23) provoque séparément et successivement l'envoi de l'énergie électrique du générateur (3) dans le primaire (6n) de chacun des transformateurs, et l'adressage au calculateur par l'unité (21) des signaux provenant du secondaire correspondant.

12. Dispositif de mesure selon l'une quelconque des revendications 1 à 11, appliqué à la mesure de la pression dans un pneumatique, caractérisé en ce qu'il comporte au niveau du pneumatique au moins un capteur de pression (15), notamment sous forme de pont de jauge de contrainte.

**Patentansprüche**

1. Einrichtung zum Messen eines Parameters auf einem drehbaren Organ (2), das sich um eine Achse dreht, die von einem Aufbau (1) getragen ist, wobei das drehbare Organ (2) wenigstens einen Aufnehmer (15) für die Ermittlung dieses Parameters sowie einen dem Aufnehmer (15) zugeordneten elektrischen Schaltkreis aufweist und der feste Aufbau (1) einerseits einen Generator (3) für elektrische Energie zur Versorgung des genannten elektrischen Schaltkreises und andererseits Auswerteeinrichtungen (8, 9) aufweist, die auf ein Messignal des genannten Parameters empfindlich sind, das in dem genannten elektrischen Schaltkreis erzeugt wird, und Verbindungseinrichtungen (4, 5, 6, 7, 11, 20) zwischen dem drehbaren Organ (2) und der genannten Achse die Übertragung der genannten elektrischen Energie des Generators (3) zu dem dem Aufnehmer zugeordneten elektrischen Schaltkreis und des Messignals, das von dem genannten elektrischen Schaltkreis erzeugt wird, zu den Auswerteeinrichtungen (8, 9) gestatten und wenigstens einen Transformator (6, 11) in Form einer umlaufenden Maschine enthalten, dessen feststehende Primärwicklung (6) mit der Achse und dessen rotierende Sekundärwicklung (11) mit dem drehbaren Organ (2) fest verbunden sind, dadurch gekennzeichnet, dass der genannte Generator (3) eine elektrische Leitung mit einer Frequenz von weniger als 10 kHz, abgibt, dass der genannte elektrische Schaltkreis (13, 14, 15, 16, 17, 18, 19, 20), der dem Aufnehmer (15) zugeordnet ist, ein Messignal hoher, in einem weiten, zwischen 20 und 100 kHz liegenden Band veränderlicher Frequenz erzeugt, und dass der Aufbau der Verbindungseinrichtungen (4, 5, 6, 7, 11, 20) den Durchgang eines weiten Durchlassbandes gestattet, das wenigstens zwischen der Frequenz des Generators und 100 kHz liegt.

2. Messeinrichtung nach Anspruch 1, dadurch gekennzeichnet, dass der genannte Generator (3) eine elektrische Leistung mit einer Frequenz abgibt, die zwischen 2 und 5 kHz liegt.

3. Messeinrichtung nach einem der Ansprüche 1 und 2, dadurch gekennzeichnet, dass der dem Aufnehmer (15) zugeordnete elektrische Schaltkreis einen Spannungs-/Frequenz-Wandler (17) aufweist, der eine variable Spannung, die das von dem Aufnehmer (15) gelieferte Signal darstellt, in eine von der genannten Spannung abhängige Frequenz transformiert.

4. Messeinrichtung nach Anspruch 3, dadurch gekennzeichnet, dass der genannte Spannungs-/Frequenz-Wandler (17) von einer Filtereinrichtung (18) und einer Signallinearisierungseinrichtung (19) gefolgt ist, um ein von dem Wandler (17) ausgehendes rechteckförmiges Signal hoher Frequenz in ein sinusförmiges Signal gleicher Frequenz umzuwandeln.

5. Messeinrichtung nach einem der Ansprüche 1 bis 4, dadurch gekennzeichnet, dass sie eine kapazitive Verbindung (20) zwischen dem dem Aufnehmer (15) zugeordneten Schaltkreis und der Sekundärwicklung (11) des Transformators enthält, um dieser Sekundärwicklung das Messignal zuzuführen.

6. Messeinrichtung nach einem der Ansprüche 1 bis 5, dadurch gekennzeichnet, dass der dem Aufnehmer (15) zugeordnete Schaltkreis Gleichrichter- und Filtereinrichtungen (13) und einen geregelten und stabilisierten Versorgungskreis (14) enthält, der die dem Aufnehmer zugeordneten Elemente (15 bis 19) versorgt.

7. Messeinrichtung nach Anspruch 6, dadurch gekennzeichnet, dass die Gleichrichter- und Filtereinrichtungen (13) und der stabilisierte Versorgungskreis (14) gegen das hochfrequente Messignal durch eine Stosswellendrossel (12) geschützt sind.

8. Messeinrichtung nach einem der Ansprüche 1 bis 7, dadurch gekennzeichnet, dass die Auswerteeinrichtungen (8, 9) ein 20–100 kHz-Bandpassfilter enthalten.

9. Messeinrichtung nach Anspruch 8, dadurch gekennzeichnet, dass dem Bandpassfilter (9) ein Sperrkreis (8) vorausgeht.

10. Messeinrichtung nach einem der Ansprüche 1 bis 9, dadurch gekennzeichnet, dass sie eine Mehrzahl von Transformatoren in Form einer umlaufenden Maschine enthält, deren Primärwicklungen (6a, 6b, ... 6n) jeweils mit einer Multiplex-und Filtereinheit (21) verbunden sind, die die vom genannten Generator (3) stammende elektrische Energie empfängt, wobei die genannte Einheit (21) von einem Rechner (23) gesteuert wird, der andererseits die von der genannten Einheit (21) stammenden Messignale empfängt.

11. Messeinrichtung nach Anspruch 10, dadurch gekennzeichnet, dass der genannte Rechner (23) getrennt und nacheinander die Lieferung der elektrischen Energie des Generators (3) in die Primärwicklung (6a, 6b, ... 6n) eines jeden der Transformatoren und die Adressierung der von den entsprechenden Sekundärwicklungen stammenden Signale am Rechner über die Einheit (21) bewirkt.

12. Messeinrichtung nach einem der Ansprüche 1 bis 11, angewandt zur Messung des Drucks in einem Reifen, dadurch gekennzeichnet, dass sie in gleicher Höhe mit dem Reifen wenigstens einen Druckaufnehmer (15) enthält, insbesondere in Form einer Belastungsmessbrücke.

**Claims**

1. A device for measuring a parameter pertaining to a rotary element (2) rotating about a shaft carried by a fixed structure (1), wherein the rotary element (2) carries at least one sensor (15) for detecting said parameter as well as an electric circuit associated with said sensor (15) and the fixed structure (1) carries, on one hand, an electric energy generator (3) for supplying power to said electric circuit and, on the other hand, utilization means (8, 9) which are responsive to a measurement signal of said parameter generated in said electric circuit, coupling means (4, 5, 6, 7, 11, 20) between said rotary element (2) and said shaft, permitting the transmission of said electric energy of the generator (3) to the electric circuit associated with the sensor and said measurement signal generated in said electric circuit to said utilization means (8, 9) and comprising at least one transformer (6, 11) in the form of a rotating machine whose fixed primary winding (6) is rigid with the shaft and whose rotary secondary winding (11) is rigid with the rotary element (2), characterized in that said generator (3) generates an electric power at a frequency lower than 10kHz, said electric circuit (13, 14, 15, 16, 17, 18, 19, 20) associated with the sensor (15) generates a measurement signal of a high frequency which varies within a wide band between 20 an 100 kHz, whereby the structure of the coupling means (4, 5, 6, 7, 11, 20) allows the passage of a wide passband at least between the frequency of the generator and 100 kHz.

2. A measuring device according to claim 1, characterized in that said generator (3) provides an electric power at a frequency between 2 and 5 kHz.

3. A measuring device according to any one of claims 1 and 2, characterized in that the electric circuit associated with the sensor (15) comprises a voltage/frequency converter (17) which converts a variable voltage constituting the signal delivered by the sensor (15) into a frequency which is a function of said voltage.

4. A measuring device according to claim 3, characterized in that said voltage/frequency converter (17) is followed by filtering means (18) and linearization means (19) of the signal to permit the conversion of a high-frequency square signal issuing from said converter (17) into a sinusoïdal signal of the same frequency.

5. A measuring device according to any one of the claims 1 to 4, characterized in that it comprises a capacitive coupling (20) between said circuit, associated with the sensor (15) and the secondary winding (11) of the transformer for injecting said measurement signal into said secondary winding.

6. A measuring device according to any one of the claims 1 to 5, characterized in that said circuit associated with the sensor (15) comprises rectifying and filtering means (13) and a stabilized and regulated supply circuit (14) supplying power to the elements (15–19) of said circuit associated with the sensor.

7. A measuring device according to claim 6, characterized in that said rectifying and filtering means (13) and said stabilized supply circuit (14) are protected from the high-frequency measurement signal by a choke coil (12).

8. A measuring device according to any one of the claims 1 to 7, characterized in that said utilization means (8, 9) comprise a band-pass filter (9) of 20 to 100 kHz.

9. A measuring device according to claim 8, characterized in that said band-pass filter (9) is preceded by a rejector (8).

10. A measuring device according to any one of the claims 1 to 9, characterized in that it comprises a plurality of transformers in the form of a rotating machine whose primary windings (6a, 6b, ...6n) are respectively connected to a multiplexing and filtering unit (21) receiving electric energy from said generator (3), said unit (21) being controlled by a calculator (23) which receives on the other hand the measurement signals coming from said unit (21).

11. A measuring device according to claim 10, characterized in that said calculator (23) causes separately and in succession the sending of the electric energy from the generator (3) to the primary winding (6n) of each one of the transformers, and the sending of the signals coming from the corresponding secondary winding to the calculator through the unit (21).

12. A measuring device according to any one of the claims 1 to 11, applied to the measurement of pressure in a pneumatic tire, characterized in that it comprises in the region of the tire at least one pressure sensor (15), in partucular in the form of a stress gauge bridge.

*Fig.1*

*Fig.3*

*Fig.2*